## Europäisches Patentamt

## European Patent Office

## Office européen des brevets

(19)

(11) Numéro de publication: **0 147 411**
**B1**

(12) **FASCICULE DE BREVET EUROPÉEN**

(45) Date de publication du fascicule du brevet:
**10.08.88**

(51) Int. Cl.⁴: **B 24 B 31/02**

(21) Numéro de dépôt: **84901732.2**

(22) Date de dépôt: **01.05.84**

(86) Numéro de dépôt international:
**PCT/CH 84/00064**

(87) Numéro de publication internationale:
**WO 84/04268 (08.11.84 Gazette 84/26)**

(54) **MACHINE POUR ASSURER L'EBAVURAGE, L'EBARBAGE ET/OU LE POLISSAGE DE PRODUITS EN VRAC.**

(30) Priorité: **04.05.83 CH 2417/83**

(43) Date de publication de la demande:
**10.07.85 Bulletin 85/28**

(45) Mention de la délivrance du brevet:
**10.08.88 Bulletin 88/32**

(84) Etats contractants désignés:
**AT BE CH DE FR GB LI LU NL SE**

(56) Documents cité:
**DE-A-1 906 623**
**FR-A-2 129 638**
**FR-A-2 172 736**
**FR-A-2 447 247**
**US-A-1 508 345**
**US-A-4 232 486**

(73) Titulaire: **THONNEY, Michel, Grenade 36, CH- 1510 Moudon (CH)**

(72) Inventeur: **THONNEY, Michel, Grenade 36, CH- 1510 Moudon (CH)**

(74) Mandataire: **Nithardt, Roland, CABINET ROLAND NITHARDT Rue Edouard Verdan 15, CH- 1400 Yverdon- les- Bains (CH)**

## Description

La présente invention concerne une machine pour assurer l'ébavurage, l'ébarbage et/ou le polissage de produits en vrac, notamment de pièces métalliques brutes moulées ou usinées, cette machine comportant une cuve rotative portée sur un bâti par un axe horizontal, entraînée en rotation par un mécanisme d'entraînement, un boîtier renfermant un dispositif de commande de ce mécanisme d'entraînement, des organes pour charger les produits à traiter dans la cuve, et des organes pour recevoir les produits après leur traitement, dans laquelle la cuve présente une ouverture latérale, une porte amovible adaptée à cette ouverture et des organes de verrouillage montés sur la porte amovible et agencés pour verrouiller la porte en position sur l'ouverture de la cuve, la machine comportant un dispositif de verrouillage-déverrouillage monté sur le bâti et agencé pour être accouplé aux organes de verrouillage de la porte et agir sur eux, et le dispositif de commande du mécanisme d'entraînement comportant des organes pour assurer la commande automatique du déroulement du cycle de travail de la machine.

Le brevet FR-A-2'129'638 décrit une machine de ce genre qui comporte quatre cuves rotatives montées sur deux tourelles communes dont l'axe de rotation est parallèle à ceux des cuves. Les organes de verrouillage de la porte de chaque cuve comportent quatre crochets latéraux basculants s'agrippant à un rebord de l'ouverture, quatre leviers de commande des crochets, une barre centrale horizontale connectée à ces leviers et agencée pour les actionner en se soulevant et s'abaissant, et un organe coulissant de verrouillage de cette barre en position abaissée contre la porte. Le bâti de la machine est équipé d'un dispositif relativement complexe pour déverrouiller cette barre, la saisir et la soulever pour ouvrir la porte, puis pour effectuer les opérations inverses.

Un inconvénient de cette machine est que les organes de verrouillage de la porte sont lourds et encombrants, notamment à cause des crochets qui dépassent des bords et de la surface extérieure de la porte. Un autre inconvénient est qu'il faut prévoir, dans le dispositif de verrouillage-déverrouillage, deux mécanismes distincts pour saisir la barre et pour actionner son organe de verrouillage. Sur un autre plan, cette machine a aussi l'inconvénient d'être dépourvue d'un revêtement intérieur de cuve qui puisse être changé facilement et rapidement en cas d'usure.

La présente invention se propose de pallier les inconvénients susmentionnés et d'apporter divers perfectionnements à une machine de ce genre.

Dans ce but, la machine selon l'invention est caractérisée en ce que les organes de verrouillage de la porte comportent un mandrin rotatif autour de son axe et solidaire d'une came agencée pour commander le déplacement axial d'au moins un verrou, en ce que le dispositif de verrouillage-déverrouillage comporte une cloche rotative destinée à être accouplée au mandrin quand la cuve se trouve immobilisée en orientation angulaire correspondante, cette cloche étant couplée à des moyens d'entraînement permettant de faire subir à la cloche un mouvement de translation verticale et un mouvement de rotation d'au moins un quart de tour dans deux sens opposés, de manière à accoupler la cloche au mandrin pour actionner les organes de verrouillage de la porte et pour soulever la porte et la remettre en place, et en ce que la cuve comporte un revêtement intérieur de protection réalisé au moyen de plaques préfabriquées pourvues d'éléments permettant leur fixation sur les parois intérieures de la cuve.

La présente invention sera mieux comprise en référence à la description d'un exemple de réalisation et du dessin annexé, dans lequel:

La figure 1 représente une vue de côté en élévation de la machine selon l'invention,

La figure 2 représente une vue de face en élévation de cette machine,

La figure 3 représente une vue agrandie, partiellement coupée du dispositif de verrouillage-déverrouillage et des organes de verrouillage de la porte de la cuve de la machine,

La figure 4 représente une autre vue du dispositif de verrouillage -déverrouillage et des organes de verrouillage de la porte de la cuve de la machine, et

La figure 5 est une vue en perspective, partiellement coupée illustrant la cuve et son revêtement intérieur.

En référence aux figures, la machine comporte un bâti comprenant essentiellement deux colonnes ou parois latérales 10 et 11 parallèles entre elles et supportant l'arbre 12 de la cuve rotative 13. Cet arbre est porté par des paliers tels que 14 et entraîné par un moteur-réducteur 16.

L'organe de chargement de la cuve 13 se compose essentiellement d'une benne basculante 17 susceptible de pivoter autour d'un axe 18 pour être amenée de sa position basse illustrée en traits pleins vers sa position haute 17' illustrée en traits interrompus. Ce déplacement s'effectue à l'aide d'un vérin hydraulique ou pneumatique 19 dont le cylindre est solidaire du bâti de la machine et dont le piston 20 est fixé à un support 21 rattaché à la benne 17.

Entre les deux parois latérales 10 et 11 du bâti de la machine et sous la cuve 13 subsiste un espace libre 22 suffisant pour permettre l'introduction par l'avant d'un récipient destiné à recevoir les produits après leur traitement. Un tel récipient connu en soi peut être constitué par une cuve portée par une palette ou éventuellement munie de roulettes permettant son déplacement autonome.

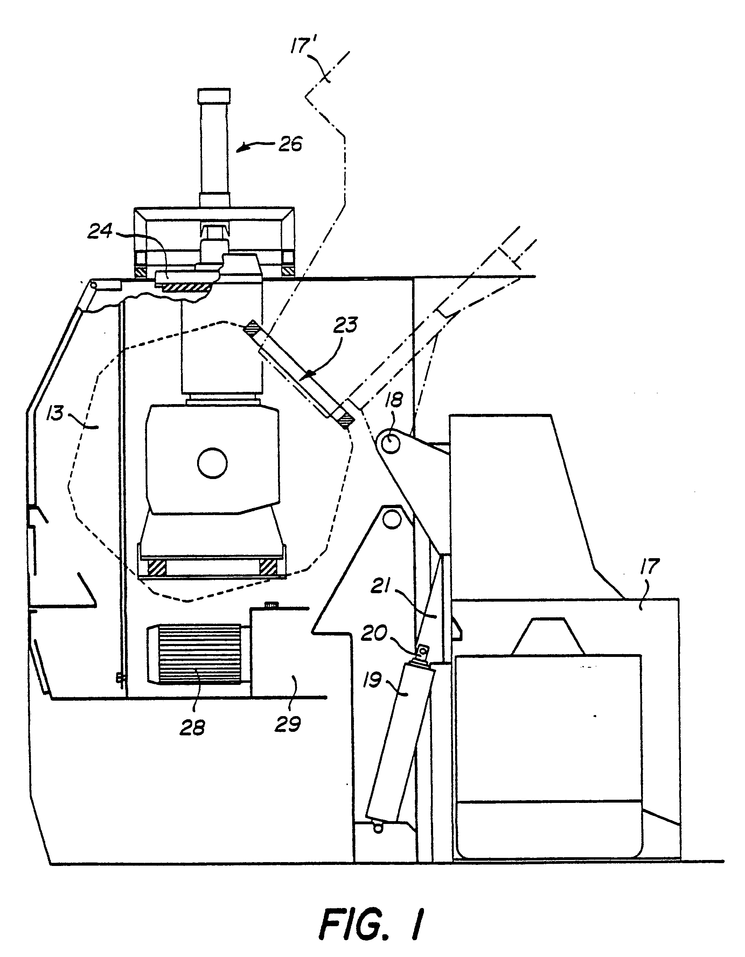

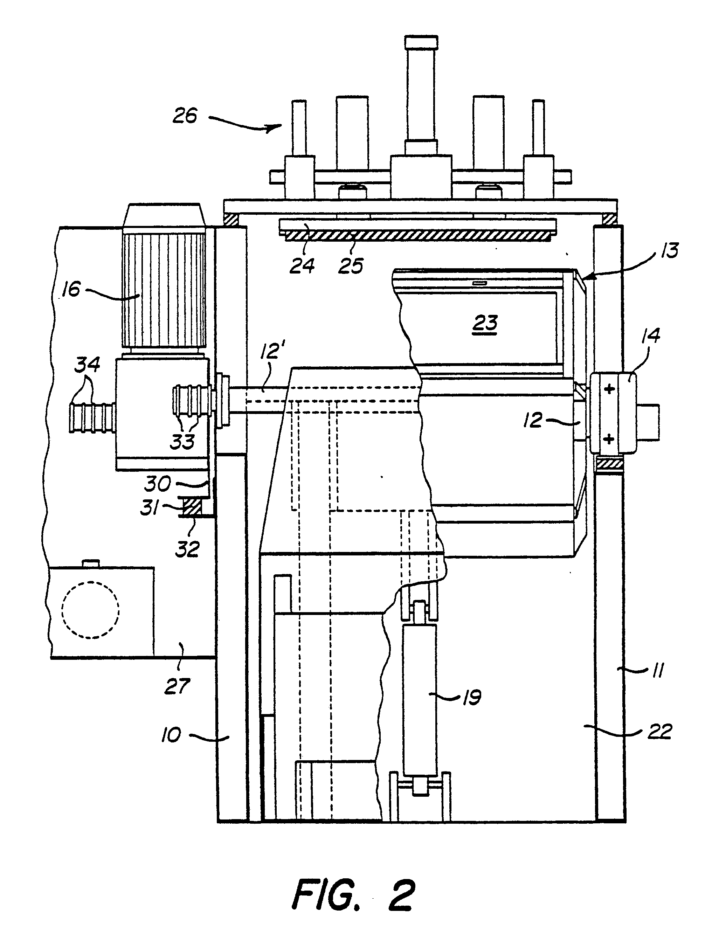

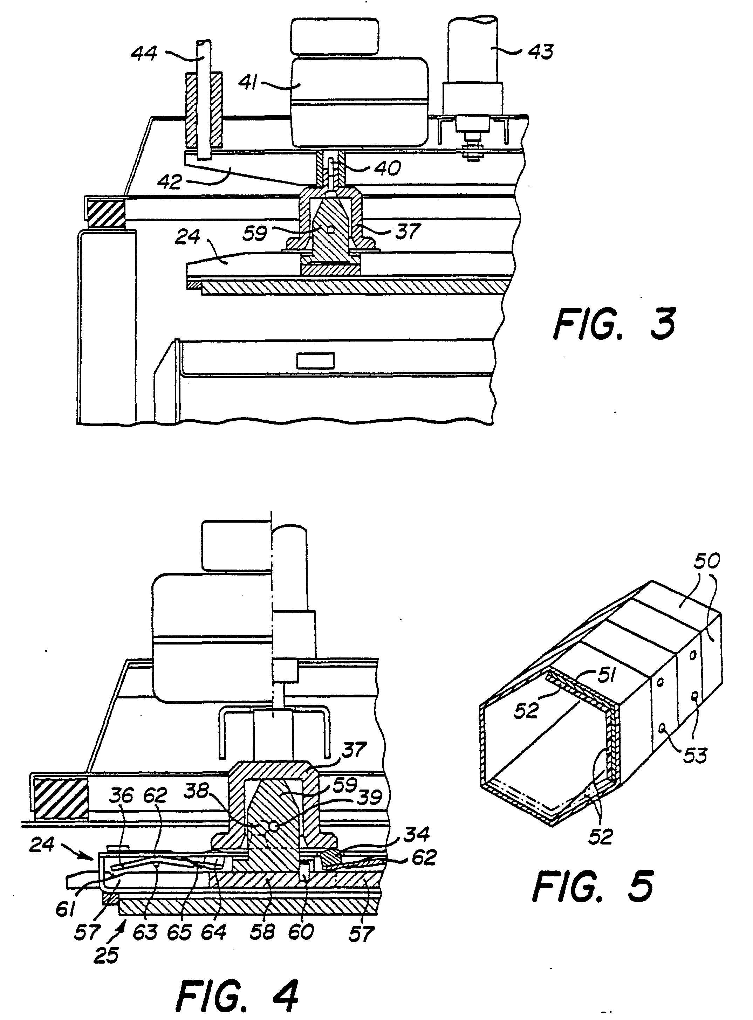

Comme le montrent les deux figures 1 et 2, la cuve 13 a une section hexagonale et l'une de ses facettes comporte une ouverture 23 munie d'une porte 24 qui a été retirée de la cuve sur les figures 1 et 2. Cette porte est pourvue d'organes de verrouillage qui seront décrits plus en détail en référence à la fig. 4. Elle comporte également un revêtement intérieur 25 réalisé en caoutchouc vulcanisé ou en une matière synthétique appropriée qui tapisse tout l'intérieur de la cuve. Un dispositif de verrouillage-déverrouillage automatique 26 permet d'une part de débloquer les organes de verrouillage de la porte 24, d'accrocher cette porte, de la soulever pour ouvrir la cuve 13, puis lorsque les opérations de chargement ou de déchargement de la cuve sont terminées, de remettre cette porte en place sur la cuve et de verrouiller les organes de verrouillage de cette porte pour que la machine soit prête pour un nouveau cycle de traitement.

Cette machine comporte également un boîtier 27 fixé sur le côté de la machine le long de la paroi latérale ou la colonne 10 du bâti. Ce boîtier contient le moteur d'entraînement 16 et un moteur d'entraînement 28 d'un groupe hydraulique 29 destiné à alimenter le vérin hydraulique 19 ainsi que les organes hydraliques du dispositif de verrouillage-déverrouillage 26 décrit plus en détail en référence aux figures 3 et 4. Le groupe d'entraînement comportant le moteur-réducteur 16 est monté sur un support 30 lui-même porté par de blocs amortisseurs 31 solidaires d'une équerre 32. Des cames 33 et 34 respectivement portées par l'arbre 12 et un axe 12' du réducteur, permettent de fournir les signaux de détection à un dispositif de commande programmable (non représenté) qui commande le déroulement automatique du cycle de travail de la machine.

Les organes de verrouillage de la porte 24 équipée de son revêtement protecteur 25 comportent deux verrous 57 opposés l'un à l'autre et coulissant à l'intérieur d'une rainure transversale ménagée axialement dans des sens opposés par une came 58 solidaire d'un mandrin 59 rotatif autour de son axe et reliés à la came 58 par des goupilles 60. Chacun des verrous 57 comporte une encoche transversale 61 dans laquelle peut s'engager un bras de blocage 62 pivotant autour d'un axe 63. Une des extrémités de chacun des bras de blocage 62 porte un téton 64 et un ressort de rappel 65 qui tend à faire pivoter le bras 62 de manière à engager l'extrémité libre 36 de ce bras dans l'encoche 61.

Le dispositif de verrouillage-déverrouillage comporte essentiellement une cloche 37 rotative autour de son axe et destinée à coiffer le mandrin 59. Cette cloche 37 comporte deux encoches 38 en forme de L destinées à recevoir respectivement deux tétons transversaux 39 solidaires du mandrin 59. Cette cloche 37 est fixée au moyen d'un boulon 40 à un vérin hydraulique 41 porté par un support 42 et destiné à faire tourner la cloche 37 d'un quart de tour dans un sens ou dans l'autre pour assurer le couplage du mandrin 59 grâce à la coopération des encoches 38 et des tétons 39. Un vérin hydraulique 43 permet de soulever et d'abaisser le support 42 pour enlever ou remettre en place la porte 24. Un axe de guidage 44 relié au bâti permet de guider le support 42 pendant son déplacement vertical.

La cuve représentée par la fig. 5 présente un profil hexagonal. Elle comporte des parois extérieures composées de plaques 50 renforcées soudées. Les surfaces intérieures portent chacune une plaque de tôle 51 servant de support à une plaque de revêtement 52 réalisée par exemple en caoutchouc vulcanisé. Ces plaques préfabriquées, faciles à remplacer, sont fixées au moyen de boulons traversants 53 ou de tout autre organe de fixation similaire.

**Revendications**

1. Machine pour assurer l'ébavurage, l'ébarbage et/ou le polissage de produits en vrac, notamment de pièces métalliques brutes moulées ou usinées, cette machine comportant une cuve (13) rotative portée sur un bâti par un axe horizontal, entraînée en rotation par un mécanisme d'entraînement (16), un boîtier (27) renfermant un dispositif de commande de ce mécanisme d'entraînement, des organes (17 à 21) pour charger les produits à traiter dans la cuve, et des organes pour recevoir les produits après leur traitement, dans laquelle la cuve présente une ouverture latérale (23), une porte amovible (24) adaptée à cette ouverture et des organes de verrouillage (57 à 65) montés sur la porte amovible et agencés pour verrouiller la porte en position sur l'ouverture de la cuve, la machine comportant un dispositif de verrouillage-déverrouillage (26) monté sur le bâti et agencé pour être accouplé aux organes de verrouillage de la porte et agir sur eux, et le dispositif de commande du mécanisme d'entraînement (16) comportant des organes (33, 34) pour assurer la commande automatique du déroulement du cycle de travail de la machine, caractérisée en ce que les organes de verrouillage de la porte comportent un mandrin (59) rotatif autour de son axe et solidaire d'une came (58) agencée pour commander le déplacement axial d'au moins un verrou (57), en ce que le dispositif de verrouillage-déverrouillage comporte une cloche rotative (37) destinée à être accouplée au mandrin (59), quand la cuve se trouve immobilisée en orientation angulaire correspondante, cette cloche étant couplée à des moyens d'entraînement (41, 43) permettant de faire subir à la cloche un mouvement de translation verticale et un mouvement de rotation d'au moins un quart de tour dans deux sens opposés, de manière à accoupler la cloche au mandrin pour actionner les organes de verrouillage de la porte (24) et pour soulever la porte et la remettre en place, et en ce que la cuve comporte un revêtement intérieur de protection réalisé au moyen de plaques préfabriquées (51, 52) pourvues d'éléments (53) permettant leur fixation sur les parois intérieures de la cuve.

2. Machine selon la revendication 1, caractérisée en ce que la cloche (37) comporte des encoches (38) en forme de L et le mandrin comporte des tétons transversaux (39) agencés pour s'engager dans lesdites encoches (38).

3. Machine selon la revendication 1, caractérisée en ce que le verrou (57) comporte au moins une encoche transversale (61), et en ce que les organes de verrouillage comportent un bras de blocage (62) pivotant sollicité par un ressort (65) pour s'engager dans cette encoche (61) pour bloquer le verrou (57) en position.

4. Machine selon la revendication 3, caractérisée en ce que le bras de blocage (62) comporte un téton (64) agencé pour coopérer avec la cloche (37) pour libérer le verrou (57).

5. Machine selon l'une quelconque des revendications précédentes, caractérisée en ce que les organes pour assurer la commande automatique du déroulement du cycle de travail comportent des cames (33, 34) solidaires d'au moins une extrémité d'un arbre entraîné par le mécanisme de commande.

**Patentansprüche**

1. Maschine zum Entgraten, Putzen und/oder Polieren von Massenerzeugnissen, insbesondere von roh gegossenen oder bearbeiteten Metallteilen, wobei diese Maschine folgende Elemente aufweist: einen rotierenden auf einem Gestell von einer horizontalen Achse getragenen Behälter (13), der von einem Antriebsmechanismus (16) in Rotation versetzbar ist, ein Gehäuse (27), welches eine Betätigung für diesen Antriebsmechanismus enthält, Elemente (17 - 21) um die zu behandelnden Erzeugnisse in den Behälter zu bringen und Elemente um die Erzeugnisse nach ihrer Behandlung aufzunehmen, dabei hat der Behälter eine seitliche Öffnung (23), eine abnehmbare an diese Öffnung angepaßte Tür (24) und Verriegelungselemente (57 - 65), die auf der abnehmbaren Tür montiert sind und die dazu dienen, die Tür in ihrer Lage auf der Behälteröffnung zu verriegeln, wobei die Maschine eine auf dem Gestell montierte Vorrichtung zum Verriegeln und Entriegeln (26) aufweist, die so ausgeführt ist, daß sie an die Verriegelungsorgane der Tür anschließbar und auf ihnen bewegbar ist, schließlich die Steuerungseinrichtung für den Antriebsmechanismus (16) mit den Organen (33, 34) um die automatische Steuerung für den Ablauf des Arbeitszyklusses der Maschine zu gewährleisten, dadurch gekennzeichnet, daß die Verriegelungsorgane für die Tür einen um seine Achse drehbaren und mit einem Nocken (58) fest verbundenen Dorn (59) aufweisen, wobei der Nocken dazu dient, die axiale Verschiebung von mindestens einem Riegel (57) zu bewerkstelligen, daß die Einrichtung zum Verriegeln und Entriegeln eine zum Kuppeln mit dem Zapfen (59) vorgesehene drehbare Glocke (37) aufweist, wenn der Behälter in entsprechender Winkellage steht, wobei diese Glocke an Bewegungsmittel (41, 43) gekuppelt ist, die gestatten, daß die Glocke eine vertikale Verschiebung und eine Drehbewegung von mindestens einer Viertelumdrehung in zwei entgegengesetzten Richtungen ausführt, um die Glocke an den Zapfen zu kuppeln, damit die Organe zur Verriegelung der Tür (24) bewegbar sind und um die Tür hochzuheben und sie wieder auf ihren Platz zurückzubringen, und daß der Behälter eine innere Schutzauskleidung aufweist, die in Form von vorgefertigten Platten (51, 52) ausgeführt ist, versehen mit Elementen (53) für ihre Befestigung auf der Innenwand des Behälters.

2. Maschine nach Anspruch 1, dadurch gekennzeichnet, daß die Glocke (37) L-förmige Einschnitte (38) und der Zapfen Querbolzen (39) aufweist, die in die Einschnitte (38) einrasten sollen.

3. Maschine nach Anspruch 1, dadurch gekennzeichnet, daß der Riegel (57) mindestens eine Querkerbe (61) aufweist, und daß die Verriegelungsorgane einen durch eine Feder (65) belasteten schwenkbaren Sperrarm (62) aufweisen, der in diese Querkerbe (61) eingreifen soll, um den Riegel (57) in seiner Stellung festzuhalten.

4. Maschine nach Anspruch 3, dadurch gekennzeichnet, daß der Sperrarm (62) eine Kuppe (64) aufweist, die von der Glocke (37) betätigt den Riegel (57) freigibt.

5. Maschine nach irgendeinem der vorhergehenden Ansprüche, dadurch gekennzeichnet, daß die Elemente, welche die automatische Steuerung des Ablaufes des Arbeitszyklusses gewährleisten, Nocken (33, 34) aufweisen, die mit mindestens einem Ende einer vom Antriebsmechanismus angetriebenen Welle fest verbunden sind.

**Claims**

1. Machine for tumbling, deburring and/or polishing bulk products, particularly rough molded or manufactured metal pieces, said machine comprising a drum (13) rotatably fitted on a frame by a horizontal axle, rotated by a drive mechanism (16), a casing (27) comprising a control means for the drive mechanism, means (17 to 21) for loading products to be treated into the drum, and means for retrieving the products after treatment, in which the drum has a lateral opening (23), a movable door (24) adapted to said opening and locking means (57 to 65) on the movable door and disposed to lock the door in closing said opening of the drum, the machine comprising a locking-unlocking device (26) fitted on the frame and disposed to be coupled and to act upon the door locking means, and the control means for the drive mechanism (16) comprising means (33, 34) to ensure automatic control of the working cycle of the machine, characterized in that the door locking means comprises a mandrel (59) which is rotatable on its axle and connected to a cam (58) disposed to control axial displacement of at least one bolt (57), in that the locking-unlocking means comprises a rotatable bell (37) disposed to be coupled with the mandrel (59) when the drum is fixed in a corresponding angular position, this bell being coupled with drive means (41, 43) permitting to the bell to move in a vertical position and to rotate at least a quarter turn in two opposite directions, so that the bell be coupled with the mandrel to move the door locking means (24) and to lift up the door and to replace it, and in that the drum comprises an interior covering made of prefabricated plates (51, 52) provided with elements (53) for attaching them to the interior walls of the drum.

2. Machine according to claim 1, characterized in that the bell (37) comprises L-shaped slots (38) and in that the mandrel comprises transverse projections (39) designed to engage said slots (38).

3. Machine according to claim 1, characterized in that the bolt (57) comprises at least one transverse slot (61) and in that the locking means comprises a pivoting blocking arm (62) urged by a spring (65) to engage slot (61) to lock the bolt (57) in a locking position.

4. Machine according to claim 3, characterized in that the blocking arm (62) comprises a projection (64) disposed to cooperate with the bell (37) to loosen the bolt (57).

5. Machine according to any one of the preceding claims, characterized in that the means for automatically controlling the working cycle comprise cams (33, 34) connected to at least on extremity of a shaft driven by the drive mechanism.

**FIG. 1**

FIG. 2

FIG. 3

FIG. 4

FIG. 5